# EUROPEAN PATENT APPLICATION

(11) **EP 2 865 864 A1**
(43) Date of publication of application: **29.04.2015**
(21) Application number: 13190068.0
(22) Date of filing: 24.10.2013
(51) Int. Cl.: F02B 23/06

(54) **Engine piston with a low heat transfer combustion chamber embedded therein**

(71) Applicant: FPT Motorenforschung AG, 9320 Arbon (CH)
(72) Inventor: Gstrein, Wolfgang, 6900 Bregenz (CH)
(74) Representative: Franzolin, Luigi

(57) **Abstract**

Engine piston with a low heat transfer combustion chamber embedded therein, the piston defining, at least partially, an axial development (C), and having a top (S) wherein a combustion chamber (13) is embedded; the combustion chamber (13) having a half-elliptic shape.

## Description

### Field of the invention

The present invention relates to a combustion chamber, in the field of the internal combustion engines. In particular, the present invention relates to an improved chamber shape embedded in an engine piston.

### Description of the prior art

Several combustion chamber shapes have bee developed in order to improve some of the several phenomenon involved in the cycles of an internal combustion engine.

Some shapes have the aim to improve the fluid dynamics of the gasses entering in the combustion chamber, others the thermal control, others both the effects.

The combustion chamber is often developed within the top portion of the pistons, namely the opposite portion of the piston with respect to the portion facing the crankshaft. Such top portion is commonly called sky or crown.

The top can have a partially convex, flat or concave shape and combinations thereof.

In the past, in order to guarantee a good fuel/air mixing, a central cone has been inserted within the cavity of the piston, the cone having the minor base oriented externally, namely towards the cylinder head.

However, such kind of combustion chamber has an increased surface of heat transfer.

### Summary of the invention

It is the main object of the present invention to provide a low heat transfer combustion chamber presenting an improved thermal behaviour.

The main principle of the invention is to approximate the portion of the combustion chamber, defined by cavity into the top of the piston, to a half-sphere in order to reduce the heat transfer with a BSFC reduction, also by eliminating the abovementioned cone.

The sphere, in fact, has the minimum surface for volume unity.

Several bench tests have shown that a cavity having a half-spherical shape does not burn properly the mixing air/fuel.

The piston cavity of the present invention, according to a longitudinal section of the piston, having substantially a longitudinal development, has a top, where in a central portion, is defined a cavity with a half-elliptic contour. The elliptic shape defines a major axis and a minor axis. The minor axis lies on the longitudinal development axis of the piston.

Preferably, such half-elliptic contour is surrounded by a protruding rim, arranged annularly between the half-elliptic contour and the top portion which annularly surrounds the cavity.

The protruding contour cooperates with the injection spray cones in order to create turbulence leading to an improved combustion and develop the benefit to keep the combustion away from the walls during expansion. The latter effect, in fact, reduces the deterioration of the lubricant oil film on the cylinder walls.

Preferably, the annular portion of the top, surrounding the cavity is flat.

Another object of the present invention is a combustion engine provided with said piston.

A further object of the present invention is a vehicle comprising such combustion engine.

These and further objects are achieved by means of the attached claims, which describe preferred embodiments of the invention.

### Brief description of the drawings

The invention will become fully clear from the following detailed description, given by way of a mere exemplifying and non limiting example, to be read with reference to the attached drawing figures, wherein:
- Fig. 1 shows a longitudinal section of a piston according to the present invention;
- Fig. 2 shows the piston of figure 1 associated with a preferred injection multi-spray configuration,
- Fig. 3 shows a top view of the preferred injection multi-spray configuration of figure 2.

The same reference numerals and letters in the figures designate the same or functionally equivalent parts.

### Detailed description of the preferred embodiments

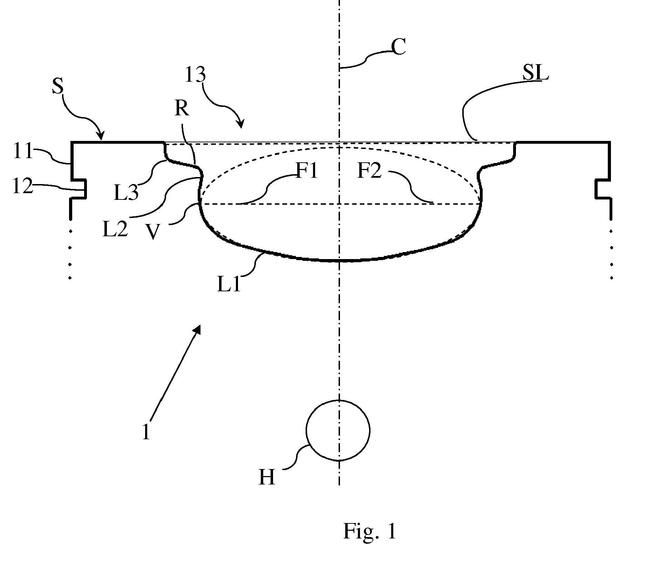

On figure 1 is shown a longitudinal section of the piston 1 according to the present invention.

The top portion of the piston, at least over the through hole H for allowing the rod pin, defines an axial symmetry and a symmetry axis C.

The top surface of the piston, called sky or crown, is preferably flat and in a central position is embedded the cavity 13 symmetrically arranged with respect to the axis C. Therefore, the top S surrounds the cavity annularly, by defining a top level SL, also shown with a dashed straight line.

The cavity has a half-elliptic shape having two focal points F1 and F2.

The dashed portion of the elliptic shape is almost tangent or tangent with the top level SL. Thus, the complete elliptic shape is under the top level SL. Preferably the upper profile of the elliptic contour is tangent with the top level SL. According to another embodiment, the upper profile is over the top level SL.

The cavity/combustion chamber contour comprises substantially three adjacent portions. One can note that, defining the piston an axial symmetry, only the left portions of the combustion chamber contour are labelled with the label L1 - L3.

L1 has half of the shape of the above-mentioned half-elliptical shape. At the major vertex V of the elliptical shape, defined by the major axis, the portion L2 opens externally for defining a protruding rim R, arranged annularly between the major vertex V and the top level SL. Then the contour opens even more, with respect to L2, till the top level.

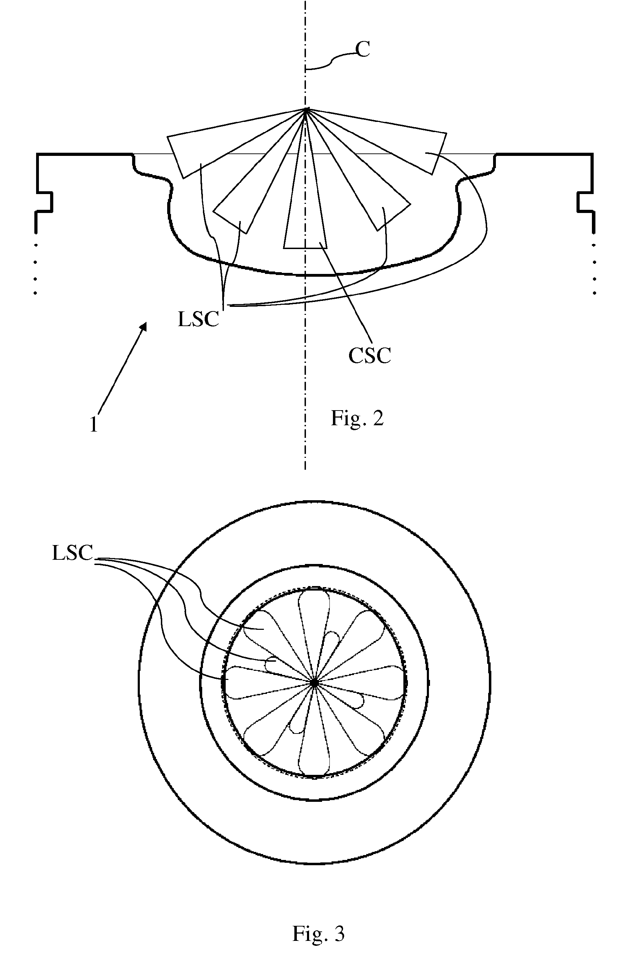

The protruding rim cooperates with the injection spray cones, shown on figure 2, in order to create turbulence leading to an improved combustion. In addition, it develops the benefit to keep the combustion away from the walls during expansion.

The piston can comprise, as usual, one or more collars 11 and one or more compression ring grooves.

The chamber can work with the standard nozzle as with adapted nozzles with two different spray cone angles and probably also one vertical injection spray, in order to distribute the fuel well over the chamber.

According to the figure 2, the combustion chamber here described can be optimally implemented in an engine provided with a central injector (not shown), producing several spray cones LSC. In this context, "central" means that the injector lies on the symmetry axis C.

The injector, preferably, produces several spray cones equally angularly spaced between each other. Preferably, the spray cones are divided into two or more sets, each of those arranged as director lines on the lateral surfaces of respective cones. Thus the two or more sets of spray cones lie on respective different cones having the same vertex and different aperture, namely different angle with respect to the symmetry axis C.

Preferably, the two or more spry cone sets are angularly shifted about the symmetry axis C, as shown in the top view figure 3.

The two or more sets of spray can be activated independently from each another.

With such a spray configuration it is also suitable for alternative (e.g. partly premixed homogeneous combustion "PCCI", "RCCI") combustion.

If a variable nozzle is available, the steep spray angles can be used for alternative combustion or late post injections (exhaust aftertreatment thermal management).

Optionally, also a central spray cone CSC can be provided. The presence of the central spray cone is justified by the absence of the metal cone inside the cavity of the known combustion chambers.

Thanks to the present invention, the combustion chamber surface to volume ratio is reduced of about the 10% - 15%, by leaving unchanged the burning properties of the engine and reducing the thermal exchange.

The present invention can be implemented either for spark ignited gas engines or gasoline combustion engines.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

Further implementation details will not be described, as the man skilled in the art is able to carry out the invention starting from the teaching of the above description.

## Claims

1. Engine piston with a low heat transfer combustion chamber embedded therein, the piston defining, at least partially, an axial development (C), and having a top (S) wherein a combustion chamber (13) is embedded; the combustion chamber (13) having a half-elliptic shape.

2. Engine piston according to claim 1, wherein a minor axis of said elliptic shape lies on said axial development (C).

3. Engine piston according to claim 1, the complete elliptic shape is completely embedded into the piston top.

4. Engine piston according to any of the previous claims 1 - 3, wherein the piston top defines a level (SL) and wherein the complete elliptic shape is tangent to said top level (SL).

5. Engine piston according to any of the previous claims 1 - 4, wherein half of said combustion chamber contour (13) comprises substantially three adjacent portions (L1 - L3) according to any longitudinal section of the piston, wherein
- one first portion (L1) having half of the shape of said half-elliptical shape,
- one second portion (L2) opening externally for defining a protruding rim (R), arranged annularly between a respective major vertex (V) and said top level (SL),
- one third portion (L3) opening even more, with respect to the second portion (L2), till the top level (SL).

6. Engine piston according to claim 1, wherein any longitudinal section of the piston has the shape shown on figure 1.

7. Combustion engine comprising at least one engine piston (1) according to any of the previous claims 1 - 6.

8. Combustion engine according to claim 7, further comprising an injector, laying on said development axis (C).

9. Combustion engine according to claim 8, wherein said injector is suitable to produce at list one set of spray cones oriented according to the directors of a cone and equally angularly spaced between each another.

10. Combustion engine according to claim 9, wherein said injector is suitable to produce two or more sets of spray cones oriented according to respective different cones sharing the same vertex and having different aperture with respect to said development axis (C).

11. Combustion engine according to claims 9 or 10, wherein said injector is suitable to produce also a central spray cone lying on said development axis (C).

12. Combustion engine according any of the previous claims 7 - 11, being a spark ignited gas engine or a gasoline combustion engines.

13. Vehicle comprising the combustion engine according to any of the previous claims 7 - 12.
